# EUROPÄISCHE PATENTANMELDUNG

(11) **EP 1 366 676 A1**
(43) Veröffentlichungstag der Anmeldung: **03.12.2003**
(21) Anmeldenummer: 03009994.9
(22) Anmeldetag: 02.05.2003
(51) Int. Cl.: A23L 1/302, A23L 1/304, A23L 1/305, A23L 1/308

(54) **Diätetisches Lebensmittel**

(30) Priorität: 28.05.2002 DE 10223636
(71) Anmelder: Danners, Gabriele, 41352 Korschenbroich (DE)
(72) Erfinder: Danners, Gabriele, 41352 Korschenbroich (DE)
(74) Vertreter: Patentanwälte Hauck, Graalfs, Wehnert, Döring, Siemons, Schildberg

(57) **Zusammenfassung**

Es wird ein diätetisches Lebensmittel beschrieben, das sich durch einen niedrigen Brennwert bei einem umfassenden Nährstoff/Vitamin/Mineralstoffangebot auszeichnet.

## Beschreibung

Die vorliegende Erfindung betrifft ein diätetisches Lebensmittel.

Für derartige Lebensmittel schreibt § 14a der Diätverordnung bestimmte Höchstgrenzen in bezug auf den physiologischen Brennwert und bestimmte Untergrenzen in bezug auf den Gehalt an Eiweiß, essentiellen Fettsäuren, verwertbaren Kohlenhydraten und Vitaminen und Mineralstoffen vor, wenn diese Lebensmittel als Mahlzeit oder anstelle einer Mahlzeit oder als Tagesration eingenommen werden.

Der vorliegenden Erfindung liegt die Aufgabe zugrunde, ein diätetisches Lebensmittel zu schaffen, das bei einem besonders niedrigen Brennwert ein besonders umfassendes Nährstoff/Vitamin/Mineralstoffangebot liefert.

Diese Aufgabe wird erfindungsgemäß durch ein diätetisches Lebensmittel gelöst, das die folgenden Bestandteile enthält:
Milcheiweiß
Molkenpulver
Weizenkleie
Oligofructose
Traubenzucker
pflanzliches Speiseöl
Aromastoffe
Vitamine
Mineralstoffe.

Die verwendeten Bestandteile sichern ein umfassendes und ausgeglichenes Nährstoffangebot. Die zugesetzten Vitamine und Minteralstoffe sichern zusätzlich zu den bereits in den anderen Bestandteilen enthaltenen Vitaminen und Mineralstoffen ein ausreichendes Vitamin/Mineralstoffangebot.

Vorzugsweise enthält das erfindungsgemäße diätetische Lebensmittel die Vitamine und Mineralstoffe in Form einer Vitamin- und Mineralstoffmischung. Diese Mischung kann in der Form von einer oder mehreren Vormischungen eingesetzt werden.

Das diätetische Lebensmittel der Erfindung enthält seine Bestandteile vorzugsweise in den folgenden Anteilen (in Gew.%):

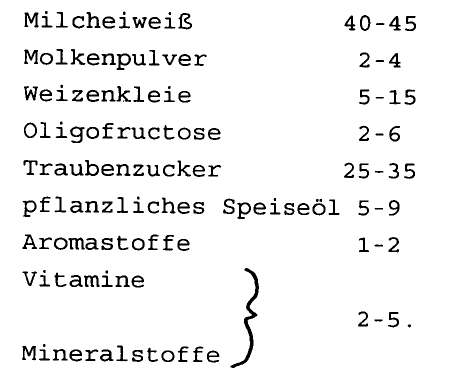

Eine besonders bevorzugte Ausführungsform enthält (in Gew.%):

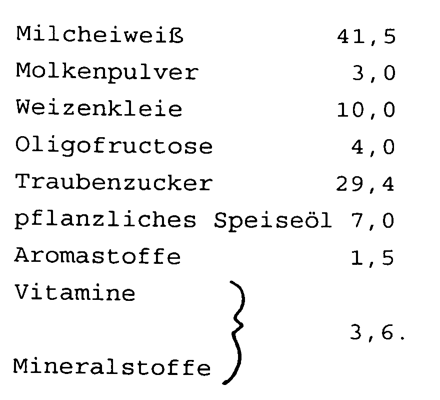

Das pflanzliche Speiseöl enthält vorzugsweise mindestens 35 Gew.% Linolensäure.

Das Milcheiweiß weist vorzugsweise folgenden Mineralstoffgehalt auf:

| | |
|---|---|
| Calcium | 1 Gew.% |
| Phosphor | 0,5 Gew.% |
| Kalium | 0,2 Gew.% |
| Natrium | 0,12 Gew.%. |

Die zugesetzten Vitamine, vorzugsweise in Form einer Vitamin- und Mineralstoffmischung, sind vorzugsweise die folgenden:

| **Vitamine** | **Verbindung** |
|---|---|
| A | Retinylpalmitat |
| D | Cholcalciferol |
| E | DL-alpha Tocopherolacetat |
| C | L-Ascorbinsäure |
| B1 | Thiaminchlorid-hydrochlorid |
| B2 | Riboflavin |
| B6 | Pyridoxinhydrochlorid |
| Niacin | Nicotinsäureamid |
| Folsäure | Folsäure |
| B12 µg | Cyanocobalamin |
| Biotin µg | D-Biotin |
| Pantothens. | Ca-D-Pantothenat |
| Vitamin K | Phyllochinon |

Die zugesetzten Mineralstoffe sind vorzugsweise die folgenden:

| **Mineralstoffe** | **Verbindung** |
|---|---|
| K | Kaliumcarbonat |
| Fe | Eisen-(II)-fumarat |
| Zn | Zinkglukonat (ca. 10 % H₂O) |
| Cu | Kupfer-(II)-sulfat x 5 H₂O |
| Jod | Kaliumjodid |
| Se | Natriumselenit x 5 H₂O |
| Na | Natriumcitrat x 2 H₂O |
| Mg | Magnesiumoxid |
| Mn | Mangangluconat x 2 H₂O |

Werden diese Vitamine und Mineralstoffe als Vitamin- und Mineralstoffmischung eingesetzt, so kommt vorzugsweise eine Mischung zur Anwendung, die sich wie folgt zusammensetzt:

| | |
|---|---|
| Vitamine | 1,0-1,5 Gew.% |
| Mineralstoffe | 80,0-85,0 Gew.% |
| Trägerstoffe, Stellmittel etc. | 10,0-20,0 Gew.% |

Vorzugsweise findet eine Mischung Verwendung, die 1,29 Gew.% Vitamine, 82,29 Gew.% Mineralstoffe und 16,42 Gew.% Trägerstoffe, Stellmittel etc. enthält.

Der Vitaminanteil der Mischung setzt sich vorzugsweise wie folgt zusammen (auf 1290,08 mg bezogen):

| **Vitamine** | **Verbindung** | **mg** |
|---|---|---|
| A | Retinylpalmitat | 18,31 |
| D | Cholcalciferol | 0,0778 |
| E | DL-alpha Tocopherolacetat | 215,3 |
| C | L-Ascorbinsäure | 666,7 |
| B1 | Thiaminchlorid-hydrochlorid | 19,77 |
| B2 | Riboflavin | 22,220 |
| B6 | Pyridoxinhydrochlorid | 27,030 |
| Niacin | Nicotinsäureamid | 244,4 |
| Folsäure | Folsäure | 2,778 |
| B12 µg | Cyanocobalamin | 0,0333 |
| Biotin µg | D-Biotin | 0,3333 |
| Pantothens. | Ca-D-Pantothenat | 72,46 |
| Vitamin K | Phyllochinon | 0,6667 |

Der Mineralstoffgehalt der Mischung setzt sich vorzugsweise wie folgt zusammen (auf 82293,34 mg bezogen):

| **Mineralstoffe** | **Verbindung** | **mg** |
|---|---|---|
| K | Kaliumcarbonat | 53022,00 |
| Fe | Eisen-(II)-fumarat | 676,00 |
| Zn | Zinkglukonat (ca. 10 % H₂O) | 1029,00 |
| Cu | Kupfer-(II)-sulfat x 5 H₂O | 65,44 |
| Jod | Kaliumjodid | 2,611 |
| Se | Natriumselenit x 5 H₂O | 2,589 |
| Na | Natriumcitrat x 2 H₂O | 23690,00 |
| Mg | Magnesiumoxid | 3684,00 |
| Mn | Manganluconat x 2 H₂O | 121,70 |

Die Trägerstoffe, Stellmittel etc. sind dann in einem Anteil von 16416,581 mg vorhanden, so daß sich insgesamt 100000,000 mg ergeben.

Das erfindungsgemäß ausgebildete diätetische Lebensmittel besitzt vorzugsweise die Darreichungsform einer Kautablette. Dabei sollen beispielsweise 15 Kautabletten pro Mahlzeit verzehrt werden, und täglich sollen 4 Mahlzeiten eingenommen werden.

Als Aromastoffe können übliche Aromastoffe Anwendung finden, je nach Geschmackswunsch.

## Patentansprüche

1. Diätetisches Lebensmittel enthaltend:
Milcheiweiß
Molkenpulver
Weizenkleie
Oligofructose
Traubenzucker
pflanzliches Speiseöl
Aromastoffe
Vitamine
Mineralstoffe.

2. Diätetisches Lebensmittel nach Anspruch 1, **dadurch gekennzeichnet, daß** es die Vitamine und Mineralstoffe in Form einer Vitamin- und Mineralstoffmischung enthält.

3. Diätetisches Lebensmittel nach Anspruch 1 oder 2, **dadurch gekennzeichnet, daß** es seine Bestandteile in folgenden Anteilen (in Gew.%) enthält:

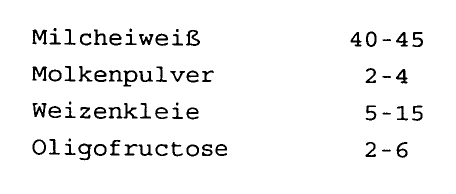

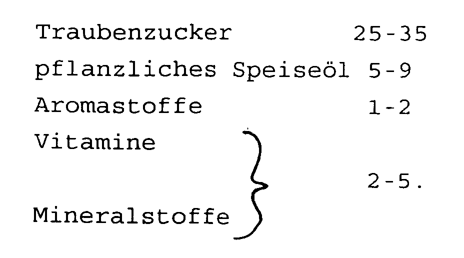

4. Diätetisches Lebensmittel nach einem der vorangehenden Ansprüche, **dadurch gekennzeichnet, daß** das pflanzliche Speiseöl mindestens 35 Gew.% Linolensäure enthält.

5. Diätetisches Lebensmittel nach einem der vorangehenden Ansprüche, **dadurch gekennzeichnet, daß** das Milcheiweiß folgenden Mineralstoffgehalt aufweist:
| | |
|---|---|
| Calcium | 1 Gew.% |
| Phosphor | 0,5 Gew.% |
| Kalium | 0,2 Gew.% |
| Natrium | 0,12 Gew.%. |

6. Diätetisches Lebensmittel nach einem der vorangehenden Ansprüche, **dadurch gekennzeichnet, daß** es folgende Vitamine enthält:
| **Vitamine** | **Verbindung** |
|---|---|
| A | Retinylpalmitat |
| D | Cholcalciferol |
| E | DL-alpha Tocopherolacetat |
| C | L-Ascorbinsäure |
| B1 | Thiaminchlorid-hydrochlorid |
| B2 | Riboflavin |
| B6 | Pyridoxinhydrochlorid |
| Niacin | Nicotinsäureamid |
| Folsäure | Folsäure |
| B12 µg | Cyanocobalamin |
| Biotin µg | D-Biotin |
| Pantothens. | Ca-D-Pantothenat |
| Vitamin K | Phyllochinon |

7. Diätetisches Lebensmittel nach einem der vorangehenden Ansprüche, **dadurch gekennzeichnet, daß** es folgende Mineralstoffe enthält:
| **Mineralstoffe** | **Verbindung** |
|---|---|
| K | Kaliumcarbonat |
| Fe | Eisen-(II)-fumarat |
| Zn | Zinkglukonat (ca. 10% H₂O) |
| Cu | Kupfer-(II)-sulfat x 5 H₂O |
| Jod | Kaliumjodid |
| Se | Natriumselenit x 5 H₂O |
| Na | Natriumcitrat x 2 H₂O |
| Mg | Magnesiumoxid |
| Mn | Mangangluconat x 2 H₂O |

8. Diätetisches Lebensmittel nach einem der Ansprüche 2 bis 7, **dadurch gekennzeichnet, daß** sich die Vitaminund Mineralstoffmischung wie folgt zusammensetzt:
| | |
|---|---|
| Vitamine | 1,0-1,5 Gew.% |
| Mineralstoffe | 80,0-85,0 Gew.% |
| Trägerstoffe, Stellmittel etc. | 10,0-20,0 Gew.%. |

9. Diätetisches Lebensmittel nach Anspruch 8, **dadurch gekennzeichnet, daß** sich die Vitamin- und Mineralstoffmischung wie folgt zusammensetzt:
| | |
|---|---|
| Vitamine | 1,29 Gew.% |
| Mineralstoffe | 82,29 Gew.% |
| Trägerstoffe, Stellmittel etc. | 16,42 Gew.%. |

10. Diätetisches Lebensmittel nach einem der vorangehenden Ansprüche, **dadurch gekennzeichnet, daß** es die Darreichungsform einer Kautablette hat.
